# EUROPEAN PATENT APPLICATION

(11) **EP 4 728 868 A1**
(43) Date of publication of application: **22.04.2026**
(21) Application number: 24207206.4
(22) Date of filing: 17.10.2024
(51) Int. Cl.: A21C 15/00

(54) **A PIPING SYSTEM ADAPTED TO PIPE CREAMS**

(71) Applicant: PJ Brands, 8540 Deerlijk (BE)
(72) Inventor: VANNESTE, Pieter, 8540 Deerlijk (BE)
(74) Representative: Ipsilon Belgium

(57) **Abstract**

A piping system comprises:
- a housing having a cylindrical recess, said recess having a central axis;
- one or more piping nozzles, each piping nozzle being in fluidic communication with, and possibly debouching in said recess by one or more cream receiving apertures ;
- two or more suction volumes, each suction volume debouching in said recess by one or more suction apertures;
- one or more cream feeding means for providing cream in said recess, each cream feeding means debouching in said recess by one or more feeding apertures;
- a cream guiding means moveable in the recess between at least a first and a second position, the cream guiding means in said first position providing a path between said feeding apertures and the suction apertures, the cream guiding means in said second position providing a path between the suction apertures and the cream receiving apertures only.

The piping system comprises a plurality of pumping systems, each pumping system comprises one or more of said two or more suction volumes, the motion of the plurality of pumping system are individually controllable.

## Description

### Field of the Invention

The present invention generally relates to a piping system, a piping apparatus and a method to pipe cream by means of this piping apparatus. The present invention further relates a method to pipe cream by means of this piping system.

### Background of the Invention

Providing icings to cakes and alike is not only a well-known way to make food and pastry attractive but is also quite time consuming to apply manually. On industrial scale, piping apparatuses are used, which apply the icing. Usually the products to be provided with an icing, pass on a conveyor belt under a series of nozzles from which the icing is piped. The nozzles remain static. In order to work economically, large amounts of products with such icing are to be produced.

As such, individualised or small series of products provided with icing, are not economically made by these apparatuses.

In a similar way, filling of pralines also requires piping of a cream- or ganache-like filling material into a mould, usually made from rigid chocolate or alike. Also here, small series of products may be required, and might not be made economically by existing apparatuses.

On the other hand, food 3D printing apparatuses are known, e.g. from CN114009817. Here, products are provided one by one, hence this is time consuming. An apparatus for piping a pasty substance is known from US4913645, where the apparatus continuously extrudes a pasty substance in a predefined and fixed path on a conveyor belt.

### Summary of the Invention

There is a need for an apparatus which may pipe cream like products in small series in an economically viable way. The apparatus preferably may pipe creams in which cream, only little air or gas bubbles are present, so the remaining bubbles cause little to no hindrance for piping the cream.

According to a first aspect of the invention, a piping system comprises:
- a housing having a cylindrical recess, said recess having a central axis;
- one or more piping nozzles, each piping nozzle being in fluidic communication with, and possibly debouching in, said recess by one or more cream receiving apertures ;
- two or more suction volumes, each suction volume debouching in said recess by one or more suction apertures;
- one or more cream feeding means for providing cream in said recess, each cream feeding means debouching in said recess by one or more feeding apertures;
- a cream guiding means moveable in the recess between at least a first and a second position, the cream guiding means in said first position providing a path between said feeding apertures and the suction apertures, the cream guiding means in said second position providing a path between the suction apertures and the cream receiving apertures only;
wherein the piping system comprises a plurality of pumping systems, each pumping system comprises one or more of said two or more suction volumes, the motion of the plurality of pumping system are individually controllable.

According to some embodiments, the number of pumping systems may equal the number of suction volumes, each suction volume being part of one of said pumping systems. As a mere example, the number of pumping systems and hence the number of suction volumes, may be more than two, even more than 3 or more than four, e.g. in the range of 2 to 15, such as in the range of 2 to 10, preferably in the range of 2 to 5. Although preferably the suction volumes and the pumping systems are related one to one, each pumping system may operate two or more suction volumes. The number of suction volumes operated by one pumping system is in the range of 1 to 3.

According to some embodiments, the cream guiding means in said first position may provide a path between said feeding apertures and each of the suction apertures, the cream guiding means in said second position providing a path between each of the suction apertures and each of the cream receiving apertures.

The one or more piping nozzles may be in fluidic communication with one or more cream receiving apertures, thereby being adapted to pipe the cream provided to the one or more cream receiving apertures. Possibly each of the piping nozzles debouches in one or more than one cream receiving apertures. Optionally each of the piping nozzles debouches in one of the cream receiving apertures. Alternatively, the one or more cream receiving apertures debouch in an intermediate void provided in a separate nozzle block and/or in an intermediate void provided in the housing of the piping system, each piping nozzle also debouching in this intermediate void provided in this nozzle block and/or in an intermediate void provided in the housing of the piping system. However also in this way, each piping nozzle is in fluidic communication with the recess, and this by one or more cream receiving apertures. The one or more cream receiving apertures may debouch in an intermediate void provided in a separate nozzle block and/or in an intermediate void provided in the housing of the piping system via piping channels.

It was found that the provision of several suction volumes, taking in and pushing our cream into to the suction volume, does not always lead to a uniform volume of cream leaving each of the piping nozzles per time unit. Minor differences in flow resistance in the piping system may cause a higher or lower flow resistance. By providing a plurality of pumping systems, preferably providing each suction volume with a dedicated pumping system, and ensuring the motion of the plurality of pumping system are individually controllable, the piping uniformity of the piping system may be adjusted and made not only more equal, but also more reliable. Such controlling is needed as not all material being piped seems to be subjected to the same flow resistance difference, so also the actions of the pumping systems may be tuned to piping of different creams and alike.

According to some embodiments, each pumping system may comprise a reciprocating positive displacement pump.

According to some embodiments, each reciprocating positive displacement pump may comprise a piston or a plunger, for taking in and pushing our cream in the suction volume, the movements of the two or more pistons or plungers are individually controllable.

According to some embodiments, the suction volumes may be part of piston pumps.

According to some embodiments, each of the pistons or plungers may be driven by a linear actuator, as an example converting a rotary motion into a linear motion. Without intending to be limited, such linear actuator may be an electric, pneumatic or hydraulic linear actuator, an external linear actuator lead screw, a linear actuator ball screw, with or without guide rail slide, a captive or non-captive linear actuator, a screw-driven actuator, a rack and pinion linear actuator, a belt driven linear actuator, a piezoelectric linear actuator, a wheel and axle linear actuator, a cam driven linear actuator, a magnetic linear actuator, an ultrasonic linear actuator and alike.

According to some embodiments, each of the pistons or plungers may be driven by a worm gear or gear rack. According to some embodiments, each of the pistons or plungers may be driven by a stepper motor, hence using a linear actuator driven by a stepper motor..

According to some embodiments, all the pistons or plungers may be identical.

According to some embodiments, all the reciprocating positive displacement pumps may be identical.

According to some embodiments, all suction volumes may be identical.

Even with these identical suction volumes, by tuning the timing, displacement or speed of the pump individually, one suction volume may, after taking in cream, comprise a different volume of cream. When pushing out the cream, the amount of clean pushed from the suction volumes may be different. Tuning the timing and time period of suction and pushing, and/or by tuning the displacement of the plunger or piston individually, e.g. by driving the linear actuator with optionally its stepper motors slightly different in timing, in displacement and/or tuning the speed of the pump individually, the volume of cream taken in and pushed out may be controlled and made identical.

Possibly, in the first position of the cream guiding means the path between feeding apertures and the suction apertures may link one feeding aperture to one the suction aperture. Alternately the path between feeding apertures and the suction apertures may link one feeding aperture to more than one suction aperture, even more than one feeding aperture may be linked to one or to more than one suction apertures.

According to some embodiments, the cream guiding means may comprise:
- a tubular element being rotatable in and coaxially with the recess, the outer diameter of the tubular element being substantially identical to the diameter of the recess, the tubular element having a first and a second series of one or more openings;
- an elongate element being positioned in the tubular element along the axis of the tubular element, the outer surface of the elongate element and the inner surface of the tubular element defining an annular void.
The tubular element is rotatable in the recess, the first and a second series of one or more openings of the tubular element, the feeding apertures, the suction apertures and the cream receiving apertures being so positioned that when the cream guiding means in said first position, the tubular element is in at least one first angular position in view of the recess, the first series of one or more openings are positioned in front of the feeding apertures and the second series of one or more openings are positioned in front of the suction apertures, the cream receiving apertures being closed by the tubular element, while when the cream guiding means is in its second position, the tubular element is in at least one second angular position in view of the recess, the first series of one or more openings are positioned in front of the feeding the suction apertures and the second series of one or more openings are positioned in front of the cream receiving apertures, the feeding apertures being closed by the tubular element.

According to some embodiments, the elongate element may be a tube or a bar.

According to some embodiments, the elongate element may be coaxial with said tubular element.

According to some embodiments, one or more than one piping nozzles are provided, the cream receiving apertures of said nozzles may be aligned along the recess according to a first line parallel to the axis of the recess.

According to some embodiments, the suction apertures of said suction volumes may be aligned according to a second line parallel to the axis of the recess.

According to some embodiments, the radial angle α between each of the feeding apertures and each of the suction apertures may be identical and the radial angle β between each of the suction apertures and each of the cream receiving apertures is substantial identical, and for which α = β.

According to some embodiments, the tubular element may be a tube, preferably provided from stainless steel or polymeric material.

According to some embodiments, the cream feeding means may comprise at least one piston or plunger pump. Possibly, each of the pistons or plungers may be driven by a linear actuator, such as but not limited to an electric, pneumatic or hydraulic linear actuator, an external linear actuator lead screw, a linear actuator ball screw, with or without guide rail slide, a captive or non-captive linear actuator, a screw-driven actuator, a rack and pinion linear actuator, a belt driven linear actuator, a piezoelectric linear actuator, a wheel and axle linear actuator, a cam driven linear actuator, a magnetic linear actuator, an ultrasonic linear actuator and alike, and possibly, but not necessarily, converting a rotary motion to a linear motion.

The cream feeding means may comprise a storage means from which the cream is provided to the recesses, e.g. via a pumping means. The storage means may be a replaceable storage container which can be replaced once empty or once the piping activity has ended, or may be an intermediate buffer storage, which is filled or refilled once the amount of cream in the intermediate buffer storage has reached a minimum level, e.g. refilled or filled up to a maximum level. According to other alternatives, storage means from which the cream is provided comprises an appropriate cream supplying means, via which the cream is guided to the recesses, e.g. via a pumping means, which supplying means is directly coupled to a cream producing means.

According to some embodiments, the system further may comprise a control means to control the motion of the two or more pumps individually.

According to some embodiments, the control means may be adapted to control the timing of the movement of the two or more pumps individually, the displacement of the two or more pumps and/or the speed of the two or more pumps.

According to some embodiments, the control means may be adapted to control the displacement of the movement of the two or more pumps individually.

According to a further second aspect, a piping apparatus adapted to pipe creams is provided. The apparatus comprises a working surface for receiving the piped cream, the working surface defining a plane, said apparatus comprises at least one piping system according to any one of the preceding claims, said piping system is positioned along an arm extending over the working surface, the one or more nozzles being oriented towards said working surface, the arm is mounted on a moving system adapted to move the arm over working surface in at least one, and preferably two, directions parallel to the plane, and to move the arm in a direction perpendicular to the plane. working surface defining a plane may be a moving surface, like the surface of a transport belt, a moveable working surface defining hence a movable plant and alike.

According to some embodiments, the system may comprise a control means to control the motion of the two or more pumps individually, said control means is adapted to control the movement of the arm as well.

The provision of this piping system is that possible air or gaseous volumes or bubbles trapped in the cream to be piped and fed into the apparatus, may be reduced in dimension and spread over a larger volume of cream to be piped. When larger volumes are pushed to and through the piping nozzle, the piping is disturbed and may cause defects in the product piped or may even cause no cream being piped during a period of time. The piping system has the advantage that these larger volumes are reduced in dimension when these air of gas volumes pass though the annular void first towards the suction volumes, and thereafter from the suction volumes to the nozzles. The larger volumes of air are spread over the elongate elements outer surface. Sucking up the cream in the annular void and thereafter spreading the sucked cream again over the elongate elements outer surface in its path towards the nozzles, reduces the larger air or gas volumes to smaller air or gas bubbles, which hinder less or may even not hinder the piping anymore.

The tube may rotate clockwise or counterclockwise, in order to provide a linkage or communication path for the cream via the annular void between the feeding apertures and the suction apertures on the one hand, and to provide a linkage or communication path for the cream via the same annular void between the suction apertures and the cream receiving apertures on the other hand. When a linkage is made between the feeding apertures and the suction apertures, the cream may be provided, e.g. pumped into the annular void via the feeding apertures. Also in this case, a piston or plunger pump may be used. More in general, the one or more pistons or one or more plungers feeding these feeding apertures may be driven by a linear actuator, possibly but not necessarily converting an electric, pneumatic or hydraulic force, or a rotary motion into a linear motion. The cream will be spread in the annular void and is preferably simultaneously sucked from the annular void by into the suction volumes, e.g. by suction pumps. The tube, once the suction volumes being sufficiently filled, will rotate clockwise or counterclockwise, in order to provide a linkage or communication path for the cream via the annular void between the suction apertures and the cream receiving apertures. Feeding of the cream is interrupted. The cream is now pushed out of the suction volumes, e.g. by the same pumps, and pushed the cream from these volumes, via the annular void, to and through the cream receiving apertures and the nozzles. Once the suction volumes are emptied, the tube will rotate clockwise or counterclockwise, in order to provide again a linkage or communication path for the cream via the annular void between the feeding apertures and the suction apertures.

According to some embodiments of the piping apparatus and/or the piping system, the elongate element may be a tube or a bar.

The tube or bar preferably is provided from stainless steel of a polymeric material, optionally a polymeric or other material being allowed in the foods industry. The material of the tube or bar may be any type of material, as long as the material is adapted to be used in combination with the cream to be piped and/or being allowed by the applicable industrial standards to be met for said piping.

The preferred dimensions of this elongate element, such as the tube or bar is less than or equal to 1500mm, and more than or equal to 2mm, such as more than or equal to 75mm, e.g. in the range of 2mm to 1500mm, e.g. in the range of 75mm to 1250mm, e.g. 100mm.

According to some embodiments of the piping apparatus and/or the piping system, the elongate element may be coaxial with said tubular element. Alternatively, the elongate element may be parallel but non-coaxial with said tubular element.

The elongate element may be rotatably mounted in the tubular element or may be statically in view of this tubular element. Hence the elongate element may rotate along with the tubular element or may rotate independently from the tubular element in the tubular element and the recess, or may be statically mounted in the recess, while being adapted to allow the tubular element to rotate over the elongate element.

According to some embodiments of the piping apparatus and/or the piping system, more than one piping nozzles may be provided, the cream receiving apertures of said nozzles being aligned along the recess according to a first line parallel to the axis of the recess. Alternatively, the cream receiving apertures of said nozzles may be non-aligned along the recess.

According to some embodiments, one or more than one piping nozzles are provided on a nozzle block. According to some embodiments, one or more than one piping nozzles are provided on a nozzle block having a void, the one or more cream receiving apertures possibly debouching in this void provided in the nozzle block. The nozzle block, with or without said void, may be removably mounted to the piping system.

The term being aligned along the recess according to a first line parallel to the axis of the recess, means that the centres of the cream receiving apertures are positioned colinear along this line parallel to the axis of the recess, while some tolerances may be allowed.

Alternative the cream receiving apertures are positioned such that their centres are within a first longitudinal strip on the inner side of the recess.

According to some embodiments of the piping apparatus and/or the piping system, more than one suction volumes are provided, the suction apertures of said suction volumes may be aligned according to a second line parallel to the axis of the recess. Alternatively, the suction apertures may be non-aligned along the recess.

The term being aligned along the recess according to a second line parallel to the axis of the recess, means that the centres of the suction apertures are positioned colinear along this line parallel to the axis of the recess, while some tolerances may be allowed.

Alternative the suction apertures are positioned such that their centres are within a second longitudinal strip on the inner side of the recess.

According to some embodiments of the piping apparatus and/or the piping system, more than one cream feeding means may be provided, the feeding apertures being aligned in the recess according to a third line parallel to the axis of the recess. Alternatively, feeding apertures may be non-aligned along the recess.

The term being aligned along the recess according to a third line parallel to the axis of the recess, means that the centres of the feeding apertures are positioned colinear along this line parallel to the axis of the recess, while some tolerances may be allowed.

Alternative the feeding apertures are positioned such that their centres are within a third longitudinal strip on the inner side of the recess.

Between each of the one or more piping nozzles and the cream receiving aperture a piping channel may be provided, debouching in said recess by the cream receiving aperture. Each of the piping nozzles may be linked to, and debouch in the recess, by a dedicated cream receiving aperture. Alternatively, between each of the one or more piping nozzles and the cream receiving aperture or apertures, a void is provided, e.g. in a nozzle block to which the nozzles are mounted and/or in an intermediate void provided in the housing of the piping system. One or more piping channels may be provided, debouching in said void on the one hand, and being linked to, and debouch in the recess on the other hand. The piping nozzles are in fluidic communication with the recesses by the cream receiving apertures via the piping channel and the void.

Between each of the one or more suction volumes and the suction apertures a sucking channel may be provided, debouching in said recess by the suction aperture. Each of the suction volumes may be linked to, and debouch in the recess, by a dedicated suction aperture.

Between each of the one or more cream feeding means and the feeding apertures a feeding channel may be provided, debouching in said recess by the feeding apertures. Each of the cream feeding means may be linked to, and debouch in the recess, by a dedicated feeding aperture.

The apparatus may comprise a heating or cooling means to heat or cool one or more of the nozzles, the piping channels, the cream receiving apertures, the suction volumes, the suction apertures, the sucking channels, the cream feeding means, the feeding apertures, the feeding channels, the housing, the tubular element and/or the elongate element.

According to some embodiments of the piping apparatus and/or the piping system, the radial angle α between each of the feeding apertures and each of the suction apertures may be substantially identical. According to some embodiments of the piping apparatus and/or the piping system, the radial angle β between each of the suction apertures and each of the cream receiving apertures may be substantially identical.

The radial angle is angel between the projection of the radius of a first aperture, i.e. the centre of this aperture, and the projection of the radius of a second aperture, i.e. the centre of this aperture, on a plane perpendicular to the axis of the recess and projected parallel to the axis of the recess.

Angles being substantially identical means that the angles are within applicable tolerances.

According to some embodiments of the piping apparatus and/or the piping system, the radial angle α between each of the feeding apertures and each of the suction apertures is identical and the radial angle β between each of the suction apertures and each of the cream receiving apertures is substantial identical, and for which α = β.

According to some embodiments of the piping apparatus and/or the piping system, β may equal 90° or 120°.

β equaling 90° has the advantage that the distance through the annular void from the feeding apertures to each of suction apertures, and from the suction apertures to each of the cream receiving apertures is different in clockwise and counterclockwise direction. This causes an improved distribution of the smaller air or gas bubbles over the cream to be piped. During use of the system, the tubular element may rotate each time over 90°, alternatingly clockwise or counterclockwise, to bring the tubular element from the first to the second angular position, and vice versa.

β equaling 120° has the advantage that the tube may continue to rotate in the same direction, i.e. clockwise or counterclockwise, to change the linkage between the feeding apertures and the suction apertures, to a linkage between the suction apertures and the cream receiving apertures, and vice versa. During use of the system, the tubular element may rotate once over 120° and once over 240°, either clockwise or counterclockwise, to bring the tubular element from the first to the second angular position, and vice versa.

It is understood that other setups of the apertures along the recess may be used, optionally with adapted profiles or positions of the first and second series of one or more openings, as long as in a first angular position, the one or more suction volumes may be filled with the cream to be piped, this cream being provided in the angular void by the one or more feeding apertures and the cream receiving apertures being blocked by the tubular element, while in a second angular position, the one or more suction volumes may be emptied and providing the cream to be piped back into the annular void, the cream receiving apertures being open for piping the cream via the nozzles, while the cream feeding apertures being blocked by the tubular element.

Optionally, more than one first angular positions may be defined, such as more than one first angular position within a first angular section, e.g. when the first series of one or more openings are positioned or rotated in a first angular section. The second series of one or more openings will hence be positioned or rotated in a corresponding angular section. During the time lapse when the first series of one or more openings are positioned or rotated in first angular section, at least one or more suction volumes may be filled with the cream to be piped (being filled all simultaneously, one after the other or during overlapping time lapses for the various suction volumes) through the second series of one or more openings, this cream being provided in the angular void by one or more feeding apertures (filling all simultaneously, one after the other or during overlapping time lapses for the various feeding apertures) via the first series of one or more openings, the cream receiving apertures remaining blocked by the tubular element during the time lapse.

Similarly, more than one second angular positions may be defined, such as more than one second angular position within a second angular section, e.g. when the first series of one or more openings are positioned or rotated in this second angular section. The second series of one or more openings will hence be positioned or rotated in a corresponding angular section. During the time lapse when the first series of one or more openings are positioned or rotated in this second angular section, at least one or more suction volumes may empty the cream back in the annular void (all suction volumes being emptied simultaneously, one after the other or during overlapping time lapses for the various suction volumes) through the first series of one or more openings. This cream provided in the angular void may be piped through the nozzles via the one or more cream receiving apertures (the nozzles piping all simultaneously, one after the other or during overlapping time lapses for the various feeding apertures) via the second series of one or more openings, the feeding apertures remaining blocked by the tubular element during the time lapse.

According to some embodiments of the piping apparatus and/or the piping system, the annular void may have a radial width W, preferably being constant along the outer surface of the elongate element.

Preferably the radial width W is constant along the outer surface of the elongate element. The width may vary depending on the stickiness of the cream in the recess, the viscosity of the cream, the temperature of the cream during piping, the amount of air present in the cream, and like. The more liquid the cream, the larger the width may be. The width may be more than or equal to 0,5mm, even more than or equal to 2mm or more than or equal to 5mm. The width may be less than or equal to 500mm , e.g. less than or equal to 40mm, e.g. less than or equal to 12mm.

According to some embodiments of the piping apparatus and/or the piping system, W may range from 0% to 99% of the radius of the diameter of the tubular element.

The suction volumes may be part of a suction system, adapted to suck cream from the annular void, and adapted to push cream back into the annular void via the suction opening. The suction system may preferably comprise a pump.

According to some embodiments of the piping apparatus and/or the piping system, the suction volumes may be part of piston pumps.

According to some embodiments of the piping apparatus and/or the piping system, the tubular element may be a tube, preferably provided from stainless steel or polymeric material. The tubular element preferably is provided from stainless steel of a polymeric material, optionally a polymeric or other material being allowed for use in the foods industry. The material of the tubular element may be any type of material, as long as the material is adapted to be used in combination with the cream to be piped and/or being allowed by the applicable industrial standards to be met for said piping.

The internal width or diameter of the tubular element may range from 2mm to 750mm, such as from 10mm to 50mm. The wall thickness of the tubular element, such as the tube, may range from 0mm (exclusive) to 750mm, such as from 0mm (exclusive) to 50mm.

The cream feeding means may preferably comprise a pump system.

According to some embodiments of the piping apparatus and/or the piping system may comprise at least one piston pump. Possibly, each of the cream feeding means may comprise one piston pump.

The housing may be a massive block, preferably from steel or polymer, in the latter case more preferred from polymeric or other material being allowed for use in the foods industry. The material of the housing may be any type of material, as long as the material is adapted to be used in combination with the cream to be piped and/or being allowed by the applicable industrial standards to be met for said piping.

The recess in the housing preferably has an axial depth, i.e. a depth in axial direction in the range of 2mm to 1500mm, such as in the range of 50mm to 250mm. The length of the tubular element may range in these same ranges, and preferably reaches out all along the length of the recess. The length of the elongate element may range in these same ranges, and preferably reaches out all along the length of the tubular element.

According to some embodiments of the piping apparatus and/or the piping system, the housing may be a massive stainless steel block, a polymer block or alike. The housing may be provided from stainless steel of a polymeric material, optionally a polymeric or other material being allowed in the foods industry. The material of the housing may be any type of material, as long as the material is adapted to be used in combination with the cream to be piped and/or being allowed by the applicable industrial standards to be met for said piping.

The first and the second series of one or more openings are provided such that when the tubular element is in a first angular position in view of the recess, the first series of one or more openings are positioned in front of the feeding apertures. This while the second series of one or more openings are positioned in front of the suction apertures. In a second angular position in view of the recess, the first series of one or more openings are positioned in front of the feeding the suction apertures while the second series of one or more openings are positioned in front of the cream receiving apertures.

When more than one opening is provided in the first series of openings, each opening of this first series of openings may be positioned such that, when the tubular element is in this first angular position, this opening will be aligned with one of the feeding apertures, and when the tubular element is in the second angular position, this opening will be aligned with one of the suction apertures. The openings of the first series of openings are so-called aligned one-on-one with both the feeding apertures or with the suction apertures. Similarly, when more than one opening is provided in the second series of openings, each opening of this second series of openings may be positioned such that, when the tubular element is in this first angular position, this opening will be aligned with one of the suction apertures, and when the tubular element is in the second angular position, this opening will be aligned with one of the cream receiving apertures. The openings of the second series of openings are so-called aligned one-on-one with both the suction apertures or with the cream receiving apertures. In this case, the number of apertures and openings are chosen such that such alignment can be provided.

Alternatively, when more than one opening is provided in the first series of openings, each of the feeding apertures and each of the suction apertures will have at least one opening of the first series of openings being positioned aligned with this feeding aperture and this suction aperture. Similarly, when more than one opening is provided in the second series of openings, each of the suction apertures and each of the cream receiving apertures will have at least one opening of the second series of openings being positioned aligned with this suction aperture and this cream receiving aperture.

This means also that, in case the feeding apertures are aligned according to a line parallel to the axis of the recess, and/or in case the suction apertures are aligned according to a line parallel to the axis of the recess and/or the cream receiving apertures are aligned according to a line parallel to the axis of the recess, the openings of the first and/or second series of openings are aligned to a line parallel to the axis of the recess. Hence preferably in that case, the axis of the tubular element and the axis of the recess are parallel, even coinciding.

The first series of openings may consist of one opening. Possibly, the first series of openings consists of one slot shaped opening, referred to as first slot-shaped opening. This first slot-shaped opening is elongate in a direction substantially parallel to the axis of the tubular element. The feeding apertures and the suction apertures will be positioned that when the tubular element is in its first angular position in view of the recess, the first slot-shaped opening is positioned in front of the feeding apertures, while the tubular element being in its second angular position in view of the recess, the first slot-shaped opening is positioned in front of the feeding the suction apertures.

The second series of openings may consist of one opening. Possibly, the second series of openings consists of one slot shaped opening, referred to as second slot-shaped opening. This second slot-shaped opening is elongate in a direction substantially parallel to the axis of the tubular element. The suction apertures and the cream receiving apertures will be positioned that when the tubular element is in its first angular position in view of the recess, the second slot-shaped opening is positioned in front of the suction apertures, while the tubular element being in its second angular position in view of the recess, the second slot-shaped opening is positioned in front of the feeding the cream receiving apertures.

The apertures preferably are circular or elliptic openings, most preferably circular openings. Possibly the number of suction apertures and the number of cream receiving apertures are identical. Possibly the shape of the cream receiving apertures and the suction apertures are similar or even identical.

The tubular element is rotatable in the recess in the housing. Most preferably the tubular element rotates in the recess. Alternatively the housing may rotate around the tubular element. The tube or rod within the tubular element may rotate with the housing or the tubular element, dependently or independently.

Hence, the first and second series of one or more openings of the tubular element, form a pair of series of openings, of which this first series of this pair of series of openings, this second series of this pair of series of openings, the feeding apertures, the suction apertures and the cream receiving apertures being so positioned that when the tubular element is in at least one first angular position in view of the recess, the first series of this pair of series of openings are positioned in front of the feeding apertures and the second series of this pair of series of openings are positioned in front of the suction apertures, the cream receiving apertures being closed by the tubular element. This while in at least one second angular position in view of the recess, the first series of this pair of series of openings are positioned in front of the feeding the suction apertures and the second series of this pair of series of openings are positioned in front of the cream receiving apertures, the feeding apertures being closed by the tubular element.

Optionally, more than one pair of series of openings may be provided, of which for each pair of series of openings, this first series of this pair of series of openings, this second series of this pair of series of openings, the feeding apertures, the suction apertures and the cream receiving apertures being so positioned that when the tubular element is in at least one first angular position in view of the recess, the first series of this pair of series of openings are positioned in front of the feeding apertures and the second series of this pair of series of openings are positioned in front of the suction apertures, the cream receiving apertures being closed by the tubular element. This while in at least one second angular position in view of the recess, the first series of this pair of series of openings are positioned in front of the feeding the suction apertures and the second series of this pair of series of openings are positioned in front of the cream receiving apertures, the feeding apertures being closed by the tubular element.

According to a further, third aspect of the invention, a system or an apparatus according to first respectively second aspect of the invention, is used for piping cream.

More in general, the apparatus according to the second aspect of the invention, and the piping system according to the first aspect of the invention, may be used to provide topping to baked products, like pastry. The apparatus may be used to apply the topping to baked products. Similarly the piping apparatus or the system may be used to provide dollops or piped shapes of creamy substances, like creamy eatable substances on small cookies, e.g. for use as appetizers. The piping apparatus or system may be used to fill containers, like glasses, with the cream or with a number of creams one on top of the other, to provide tertlets, puffs or small puffs filled with a cream, mince biscuits like mince pie biscuits or mincemeat cookies, Paris-brests, meringues, madeleines, macarons, pies, large pies, genoises or sponge cakes, éclairs, crackers, pastry doughs for sweet or salt biscuits, toasts, tarts, eclairs and alike.

The apparatus or system may be used to pipe sauces like cold or hot sauces, e.g. in jars, for piping dipping sauces, sauces on vegetables or fish or meat.

Likewise, the apparatus or system can be used to pipe creams into 3D-volumes or shapes, like moulds, possibly on the working plate, possibly this working plate being covered by a support plate, e.g. a baking tray of baking sheet. The cream may be an eatable cream, like whipped cream, chantilly of cream, butter cream (also known as crème au beurre), chocolates praline, hazelnut praline, praline with crushes (small pieces of a different substance), chocolate, gianduja, ganache, fondant, caramel, caramel panache, choco or choco past, coco or coco past nut past, past of fruits or vegetables, mashed potatoes, eggnog, marzipan, speculoos cream, more liquid creams, peanut butter, cheese spread, herb cheese, crumble products creamy meat or fish preparations, even chocolate cream or molten chocolate, and alike. The apparatus or system can be used to provide filling of a praline or chocolate in the outer shell of the praline or chocolate, which may be bars, tablets or have any other suitable shape. The apparatus or system can be used to fill jars, or similar holding means with any cream, like eatable creams, ointment, medical or cosmetic creams, and this for e.g. small runs. The jars or holding means may be distributed, according to a known distribution scheme, on a plate which is placed on the working surface of the apparatus. The apparatus or system may fill the jars or holding means by piping the cream into the jars or holding means. The piped creams may be e.g. facial creams or ointments, care creams or ointments, oils for body care or for use in wellness centres, for use in fitness centres, for use in sports and/or recreation centres, for use in hotels medical creams, natural preparations, herbal creams, sun protection products, nail polish, coloured and/or nourishing lipsticks. The piped creams may be products for use on humans or animals.

The creams may be cleaning creams, e.g. for intensive cleaning where products are packed in small packaging. The cream may be e.g. shoe polish. The creams may be creams packed in small packaging, like packaging for travel or short holidays. The creams may be eatable or non-eatable creams. The creams may be fairly liquid creams, or may be more viscous creams, also referred to as pasts. The apparatus can be used to pipe technical products like technical creams and cream-like products, e.g. silicones, sealers, MS-polymers, glues and alike. Hence the apparatus or system may be used to make products comprising creamy topping or alike or to provide jars or similar holding means filled with creamy products in small runs, i.e. in small quantities in an economical way, allowing quick changes of products being made and/or creams to be used.

According to a fourth, independent aspect of the invention, a piping apparatus adapted to pipe creams is provided. The apparatus comprises a working surface for receiving the piped cream, the working surface defining a plane, said apparatus comprises one or more piping nozzles positioned along an arm extending over the working surface, the one or more nozzles being oriented towards said working surface, the arm is mounted on a moving system adapted to move the arm over working surface in at least one, and preferably two, directions parallel to the plane, and to move the arm in a direction perpendicular to the plane. The apparatus comprises a control means to control the timing of the piping of the cream and /or the speed and/or the volume of the cream piped through the one or more nozzles. The control means may be adapted to control the timing the piping of the cream. The control means may be adapted to control the volume of the cream piped through the one or more nozzles. The control means may be adapted to control the speed of the piping of the cream. The control means is adapted to control the timing of the piping of the cream and the volume of the cream piped through the one or more nozzles. The control means is adapted to control the timing and/or the volume of the piping of the cream and/or the speed of the cream piped through the one or more nozzles.

The features of this piping apparatus according to the fourth aspect of the invention, as will be set out hereinafter, may be combined with the features of the piping apparatus according to the second aspect of the invention. The piping system according to the first aspect of the invention, may be used in combination with the features of this piping apparatus according to the fourth aspect of the invention, to provide the piping nozzles of it. The piping system according to the first aspect of the invention may be mounted on the arm extending over the working surface.

According to some embodiments, the apparatus may comprise a plurality of piping nozzles axially distributed along said arm.

The working surface may be a substantially flat, e.g. a flat plate. The arm may be moved over the working surface according to a direction substantially parallel to the plane defined by this flat plate. The arm may extend over the working surface, the at least one direction being substantially parallel to the plane may be the direction perpendicular to the axis of the arm. Preferably the arm, extending over the working surface, may be moved in two directions over the working surface. The first direction may be the direction perpendicular to the axis of the arm, the second direction being the direction orthogonally to this first direction, and parallel to the axis of the arm. It is clear that alternatively, the two directions may be any two directions, each direction being parallel to the plane, these two directions being nonparallel to each other. Preferably the two directions are orthogonal one to the other. The working surface may also be a part of a larger product supporting means, like a part of an endless belt on which the intermediate products, i.e. the ones to be provided with a piped layer or object, is supported throughout a larger production apparatus. The products may continue to move on such product supporting means while the piping apparatus pipes said cream, or the movement of such product supporting means may temporarily be interrupted to allow the piping apparatus to pipe said cream.

The moving system can also move the arm in a direction perpendicular to the plane. Preferably this direction is perpendicular to one or, if applicable, both directions being parallel to the plane. Possibly these two directions parallel to the plane, and the direction perpendicular to the plane, define three mutually orthogonal directions of movement.

According to some embodiments, the moving system may be adapted to move the arm over said working surface in two, mutually nonparallel, directions parallel to the plane, and a direction perpendicular to the plane.

Optionally, the piping nozzle or nozzles may also be rotated around an axis of rotation parallel to the axis of the arm. Possibly, the arm itself may be rotated around its axis. Optionally one, some or each of the piping nozzles may be rotated around the direction of piping of the cream.

According to some embodiments, the apparatus may comprise a control means to control the movement of the arm, said control means is adapted to move the arm along a predefined path. According to some embodiments, the apparatus may comprise a control means to control the movement of the arm, controlling the movement of the arm over working surface in at least one, and preferably two, directions parallel to the plane, and in a direction perpendicular to the plane, each of the movements in the two or three direction being controlled individually and independent one from the other. Optionally, the piping nozzle or nozzles may also be rotated around an axis of rotation parallel to the axis of the arm, this rotation being controlled by the control means. Hence said control means may control the movements of the arm each movement in a direction being controlled independent from the other movement or movements in the other direction or directions. This control means may be the same control means which controls the timing, volume and/or speed of the piping of the cream through the one or more nozzles.

The piping apparatus, at least the moving of the arm, may be controlled by a control means. This control means may be programmed or instructed to have the nozzles following a given path over the working surface. An interface may be present to provide this path or these instructions to the control means, or this path or these instructions may be loaded into the control means using a wired or wireless communication means or channel.

According to some embodiments, the apparatus may comprise a control means to control timing of the piping of the cream through the one or more nozzles. This control means may control the timing of the piping and/or the time lapse and/or time period of piping. The control means may control the timing of the piping and/or the time lapse and/or time period of piping for each piping nozzle separately, for some piping nozzles together or possibly even for all piping nozzles together. According to some embodiments, the apparatus may comprise a control means to control the volume of the cream piped through the one or more nozzles. The control means may control the volume being piped by each piping nozzle separately, some piping nozzles together or possibly even all piping nozzles together. Preferably, the apparatus comprises a control means to control the timing the piping of the cream and the volume of the cream piped through the one or more nozzles. Additionally or alternatively, this control means may control the speed and/or the volume of the piping of the cream.

The piping of the cream may be executed according to a predefined timing or sequence, which even may be aligned with the moving of the arm. This control means may be programmed or instructed to have the one or more nozzles piping the cream during a given time lapse or during subsequent time lapses. The control means may be programmed or instructed to have the one or more nozzles piping cream during one or more time lapse, while the arm is moving over the working surface.

The piping of the cream may alternatively or additionally be controlled based upon input of one or more sensors, sending the amount of cream to be or having been piped to the working surface or to the individual products on the working surface to which the cream is to be provided. Alternatively or additionally the piping may be controlled by optical sensors, image capturing and processing means and alike. All these sensors or image capturing and processing means may correspond with and provide information to the control means controlling the piping of the cream.

An interface may be present to provide this programmed timings or these instructions to the control means, or these programmed timings or these instructions may be loaded into the control means using the wired or wireless communication means or channel. The piping may be executed for all nozzles simultaneously, or the piping of each of the nozzles may be controlled and executed individually.

In case that more than one, i.e. a plurality of nozzles being provided, the number of nozzles along the arm (per linear meter) may be 2 or more than 2, such as 3 or more than 3, e.g. 4 or more than 4, even 5 or more than 5. The number of nozzles along the arm (per linear meter) may be in the range of 2 to 100, preferably in the range of 2 to 50, such as in the range of 2 to 24. The interdistance between the piping nozzles, centre to centre, may be equal or may mutually differ one from the other. Preferably the interdistance between each pair of adjacent piping nozzles is at least 2mm, e.g. at least 5mm, such as in the range of 2mm to 1000mm. The length of the arm may preferably be in the range of 10mm to 1000mm, such as in the range of 100mm to 3000mm.

Each nozzle may be provided with a tip. The tips of the nozzles may be identical, similar or mutually different. The tips may be round tips, open star tips, closed star tips, basketweave tips, ruffle tips, leaf tips, petal tips, multi-opening tips, drop flower tips or tips providing a special piping result. The opening size of the tips may vary.

The working surface may have dimensions in the range of 100mm to 3000mm wide, which is preferably the direction parallel to the direction of the axis of the arm. The working surface may have dimensions in the range of 250mm to 5000mm long. More preferably, the working surface may have dimensions in the range of 135mm to 1080 wide, and/or 275mm by 1650mm long.

The travel distance of the arm in the direction perpendicular to the plane of the working surface is preferably at least 20mm, more preferably in the range of 20mm to 1500mm, e.g. at least 10mm, more preferably in the range of 10mm to 1500mm measured from the working surfaces.

The apparatus according to the invention has similar or identical advantages as the apparatus according to the second aspect of the invention.

The apparatus may comprise a heating or cooling means to heat or cool the nozzles at least during piping of the cream or substance.

According to some embodiments, the apparatus further may comprise a piping system according to the first aspect of the invention.

According to some embodiments, the apparatus further may comprise a piping system, said piping system comprises:
- a housing having a cylindrical recess, said recess having a central axis;
- said one or more piping nozzles, each piping nozzle being in fluidic communication with, and possibly debouching in, said recess by one or more cream receiving aperture;
- one or more of suction volumes, each suction volume debouching in said recess by one or more suction apertures;
- one or more cream feeding means for providing cream in said recess, each cream feeding means debouching in said recess by one or more feeding apertures;
- a tubular element being rotatable in and coaxially with the recess, the outer diameter of the tubular element being substantially identical to the diameter of the recess, the tubular element having at least a first and a second series of one or more openings;
- an elongate element being positioned in the tubular element along the axis of the tubular element, the outer surface of the elongate element and the inner surface of the tubular element defining an annular void;
wherein the tubular element is rotatable in the recess, the first and a second series of one or more openings of the tubular element, the feeding apertures, the suction apertures and the cream receiving apertures being so positioned that when the tubular element is in at least one first angular position in view of the recess, the first series of one or more openings are positioned in front of the feeding apertures and the second series of one or more openings are positioned in front of the suction apertures, the cream receiving apertures being closed by the tubular element, while in at least one second angular position in view of the recess, the first series of one or more openings are positioned in front of the feeding the suction apertures and the second series of one or more openings are positioned in front of the cream receiving apertures, the feeding apertures being closed by the tubular element, the housing being mounted on the arm and providing said plurality of piping nozzles distributes along said arm. Said plurality of piping nozzles may be axially distributes along said arm, i.e. along the axis of the arm, or along a direction non-parallel to the axis of the arm, e.g. along an axis perpendicular to the arm and preferably also parallel to said plane. The outer diameter of the tubular element being substantially identical to the diameter of the recess means that the tubular element fits in and may rotate in the recess, optionally leaving a minor gap between the outer wall of the tubular element and the inner diameter of the recess.

The one or more piping nozzles may be in fluidic communication with one or more cream receiving apertures, thereby being adapted to pipe the cream provided to the one or more cream receiving apertures. Possibly each of the piping nozzles debouches in one or more than one cream receiving apertures. Optionally each of the piping nozzles debouches in one of the cream receiving apertures. Alternatively, the one or more cream receiving apertures debouch in an intermediate void provided in a separate nozzle block and/or in an intermediate void provided in the housing of the piping system, each piping nozzle also debouching in this intermediate void provided in this nozzle block and/or in an intermediate void provided in the housing of the piping system. However also in this way, each piping nozzle is in fluidic communication with the recess, and this by one or more cream receiving apertures. The one or more cream receiving apertures may debouch in an intermediate void provided in a separate nozzle block and/or in an intermediate void provided in the housing of the piping system via piping channels.

The housing is preferably mounted on the arm such that a central axis of the housing and/or the central axis of the recess in the housing, is parallel to, and possibly even coincide with the axis of the arm. Alternatively, a central axis of the housing and/or the central axis of the recess in the housing, may be non-parallel to, and possibly even perpendicular to the axis of the arm.

According to a fifth, independent aspect of the invention, a piping system adapted to pipe creams is provided. The piping system comprises:
- a housing having a cylindrical recess, said recess having a central axis;
- one or more piping nozzles, each piping nozzle being in fluidic communication with, and possibly debouching in, said recess by one or more cream receiving apertures ;
- one or more suction volumes, each suction volume debouching in said recess by one or more suction apertures;
- one or more cream feeding means for providing cream in said recess, each cream feeding means debouching in said recess by one or more feeding apertures;
- a tubular element being rotatable in and coaxially with the recess, the outer diameter of the tubular element being substantially identical to the diameter of the recess, the tubular element having a first and a second series of one or more openings;
- an elongate element being positioned in the tubular element along the axis of the tubular element, the outer surface of the elongate element and the inner surface of the tubular element defining an annular void;
wherein the tubular element is rotatable in the recess, the first and a second series of one or more openings of the tubular element, the feeding apertures, the suction apertures and the cream receiving apertures being so positioned that when the tubular element is in at least one first angular position in view of the recess, the first series of one or more openings are positioned in front of the feeding apertures and the second series of one or more openings are positioned in front of the suction apertures, the cream receiving apertures being closed by the tubular element, while in at least one second angular position in view of the recess, the first series of one or more openings are positioned in front of the feeding the suction apertures and the second series of one or more openings are positioned in front of the cream receiving apertures, the feeding apertures being closed by the tubular element.

The one or more piping nozzles may be in fluidic communication with one or more cream receiving apertures, thereby being adapted to pipe the cream provided to the one or more cream receiving apertures. Possibly each of the piping nozzles debouches in one or more than one cream receiving apertures. Optionally each of the piping nozzles debouches in one of the cream receiving apertures. Alternatively, the one or more cream receiving apertures debouch in an intermediate void provided in a separate nozzle block and/or in an intermediate void provided in the housing of the piping system, each piping nozzle also debouching in this intermediate void provided in this nozzle block and/or in an intermediate void provided in the housing of the piping system. However also in this way, each piping nozzle is in fluidic communication with the recess, and this by one or more cream receiving apertures. The one or more cream receiving apertures may debouch in an intermediate void provided in a separate nozzle block and/or in an intermediate void provided in the housing of the piping system via piping channels.

The features of this piping system according to the fifth aspect of the invention, may be combined with the features of the piping apparatus according to the second aspect of the invention. The piping system according to the first aspect of the invention, may be used in combination with the features of this piping system according to the fifth aspect of the invention.

According to a sixth aspect of the invention, the piping apparatus according to the second or fourth aspect and/or the piping system according to the first or fifth aspect is used for piping any of cream, eatable cream, butter cream, butter, vegetable cream, meat based cream, fish based cream, ice cream, cosmetic cream. medical cream and chocolate mashed potatoes. The piping apparatus according to the second or fourth aspect and/or the piping system according to the first or fifth aspect may be used for piping any of cream in particular during filling of chocolates or pralines with a cream or a filling.

The piping apparatus and/or the piping system may be used to provide topping to baked products, like pastry, which baked products do not need to be taken from the baking plate. the baked products typically are positioned on the baking plate in a well-known order or distribution scheme. Hence the piping apparatus and/or the piping system may be used to apply the topping to these baked products by having the moving of the arm and the activity of the nozzles preprogramed. Hence the piping apparatus and/or the piping system may provide topping to baked products on small scale or for small runs, as switching from one type of pastry to another can be done easily and quickly. Similarly the piping apparatus and/or the piping system may be used to provide dollops or piped shapes of creamy substances, like creamy eatable substances on small cookies, e.g. for use as appetizers. The cookies may be distributed according to a known distribution scheme, on a plate which is placed on the working surface. The piping apparatus and/or the piping system may be used to fill containers, like glasses, with the cream or with a number of creams one on top of the other, to provide tertlets, puffs or small puffs filled with a cream, mince biscuits like mince pie biscuits or mincemeat cookies, Paris-brests, meringues, madeleines, macarons, pies, large pies, genoises or sponge cakes, éclairs, crackers, pastry doughs for sweet or salt biscuits, toasts, tarts, eclairs and alike.

The piping apparatus and/or the piping system may be used to pipe sauces like Cold or hot sauces, e.g. in jars, for piping dipping sauces, sauces on vegetables or fish or meat.

Likewise, the piping apparatus and/or the piping system can be used to pipe creams into 3D-volumes or shapes on the working plate, this being covered by a support plate. The cream may be an eatable cream, like whipped cream, chantilly of cream, butter cream (also known as crème au beurre), praline, hazelnut praline, praline with crushes (small pieces of a different substance), gianduja, ganache, fondant, caramel, caramel panache, choco or choco past, coco or coco past nut past, past of fruits or vegetables, mashed potatoes, eggnog, marzipan, speculoos cream, more liquid creams, peanut butter, cheese spread, herb cheese, crumble products creamy meat or fish preparations, even chocolate cream or molten chocolate, and alike. The piping apparatus and/or the piping system can be used to fill jars, or similar holding means with any cream, like eatable creams, ointment, medical or cosmetic creams, and this for small runs. The piped creams may be e.g. facial creams or ointments, care creams or ointments, oils for body care or for use in wellness centres, for use in fitness centres, for use in sports and/or recreation centres, for use in hotels medical creams, natural preparations, herbal creams, sun protection products, nail polish, coloured and/or nourishing lipsticks. The piped creams may be products for use on humans or animals.

The piped creams may be cleaning creams, e.g. for intensive cleaning where products are packed in small packaging. The piped cream may be e.g. shoe polish. The piped creams may be creams packed in small packaging, like packaging for travel or short holidays. The piped creams may be eatable or non-eatable creams. The piped creams may be fairly liquid creams, or may be more viscous creams, also referred to as pasts.

### Brief Description of the Drawings

Fig. 1 illustrates a piping apparatus according to the second and fourth aspect of the invention, comprising a piping system according to the first or fifth second aspect of the invention;
Fig. 2 illustrates schematically a cross section of the piping system of figure 1, where the tubular element is in the first angular position; and
Fig. 3a and 3b illustrate schematically a cross section of the piping system of figure 1, where the tubular element is in the second angular position.
Fig. 4 illustrates a perspective view of a piping system according to the first aspect of the invention.
Fig. 5a to 5c illustrates side views of the piping system of figure 4.
Fig. 6 illustrates a cross section of the piping system of figures 4 and 5, according to the plane AA'.

The same reference signs in the different figures refer to the same or a similar object. When in this description references are made to ranges, the ranges are meant to be inclusive, except when explicitly mentioned differently.

### Detailed Description of Embodiment(s)

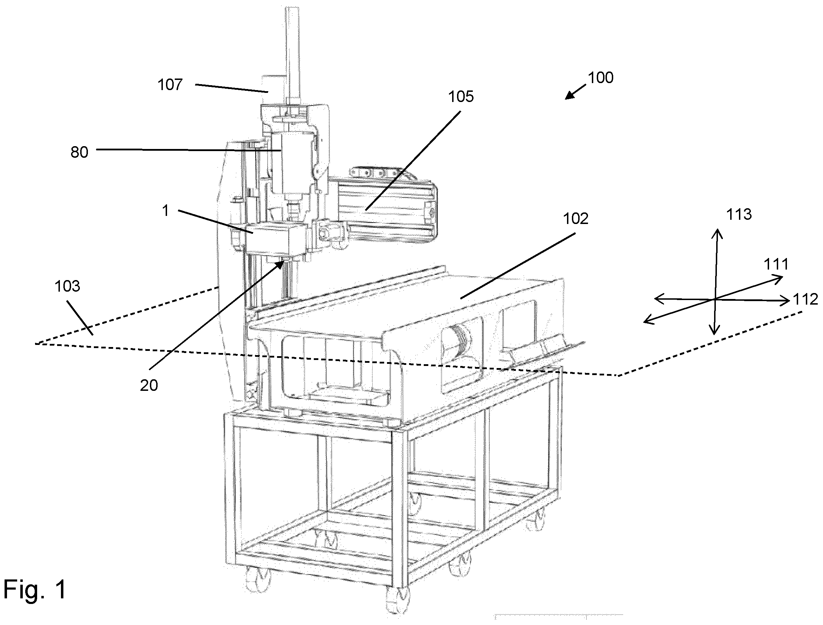

A piping apparatus 100 adapted to pipe creams according to the first aspect of thein invention is shown in figure 1. The apparatus comprises a working surface 102 for receiving the piped cream. This working surface is this embodiment is a tabletop, but alternatively this can be a part of an endless belt or alike. The working surface defines a plane 103, which in this embodiment is a substantially horizontal plane. The apparatus further comprises some piping nozzles 20. The piping nozzles are part of a piping system 1 according to the second aspect of the invention. This piping system 1, together with its piping nozzles 20 is positioned along an arm 105, this arm extending over the working surface. The piping nozzles are oriented towards said working surface. The arm is mounted on or is part of a moving system 107 which moving system can move the arm over working surface two directions 111 and 112 being parallel to the plane, and in a third direction 113 perpendicular to the plane. The arm may move in two or even in all three of these directions simultaneously.

The cream to be piped is stored in a storage and pumping means 80 which is in communication with the piping nozzles via the piping system 1. The cream to be piped can be pushed out of the storage by pressing the cream out of the storage and pumping means 80 towards the piping system 1. The cream leaving the piping system 1 through the nozzles 20, is piped towards the working surface 102. As a mere example, the working surface may be provided with a baking plate, on which intermediate pastry is positioned in a checkerboard pattern. The cream, to be used as topping for the pastry, can be piped on the intermediate pastries by bringing a nozzle above one of the intermediate pastries by moving the arm in the directions 111 and 112. The nozzle is lowered to the wanted height above the pastry. Once positioned, the piping may take place, while the arm moves the nozzle over the pastry. By continuing the piping, and changing the height of the nozzle, and/or changing the position of the nozzles in one of the other directions, the topping may be shaped in the third dimension upwards. When the nozzle itself may be moved , such as rotated in a direction along the piping direction, this rotation or movement may be used to shape the dollop or alike. Once topped, the nozzle may move to an adjacent pastry by moving the arm in directions 111 and/or 112, and the action repeats for topping another pastry. The timing of the movements, in each of the three directions individually and independently, and the timing of the piping can be controlled by a control unit being part of the apparatus. By properly positioning the pastries, more than one intermediate pastry can be provided with a topping simultaneously.

Alternately, but not shown in the figures, the storage and pumping means 80 may be an intermediate buffer storage, which is filled or refilled once the amount of cream in the intermediate buffer storage has reached a minimum level, and is refilled or filled up to a maximum level. Cream level sensors are provided to activate and deactivate the filling or refilling. According to further alternatives, the storage means from which the cream is provided comprises an appropriate cream supplying means, via which the cream is guided to the recesses, e.g. via a pumping means, which supplying means is directly coupled to a cream producing means.

As a mere other example, the working surface may be provided with jars positioned in a checkerboard pattern. The cosmetic cream, to be filled into the jars, can be provided in the jars by bringing a nozzle above one of the jars by moving the arm in the directions 111 and 112. The nozzle is lowered to the wanted height in the jar. Once positioned, the piping may take place, while the arm moves the nozzle gradually upwards until the jar is filled. Once filled, the nozzle may move to an adjacent jar by moving the arm in directions 111 and/or 112, and the action repeats for filing another jar. The timing of the movement and the timing, volume and/or speed of the piping can be controlled by a control unit being part of the apparatus.

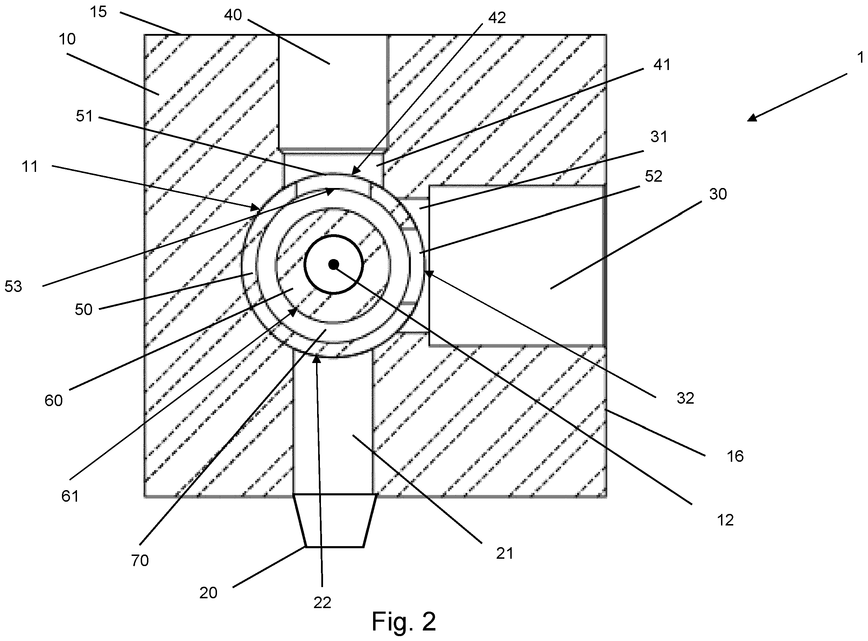

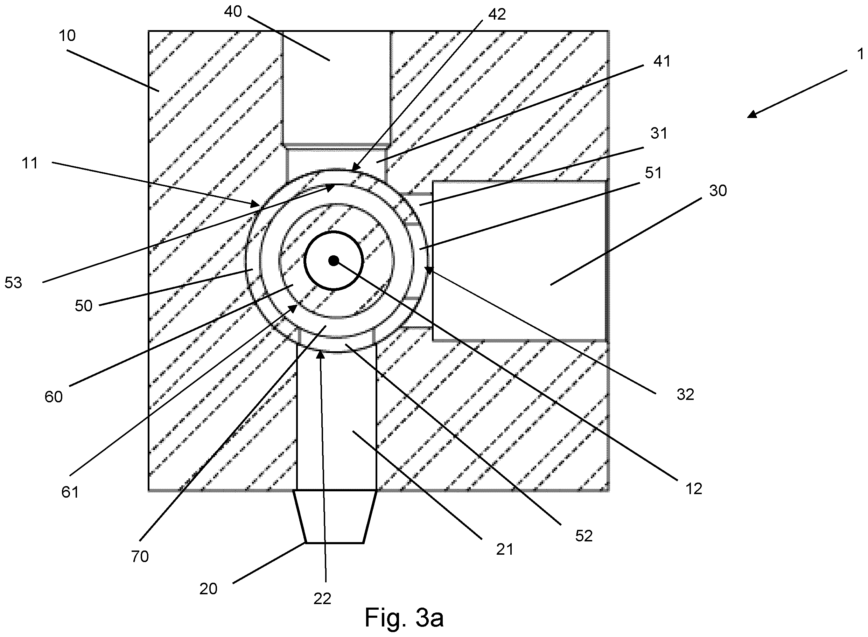

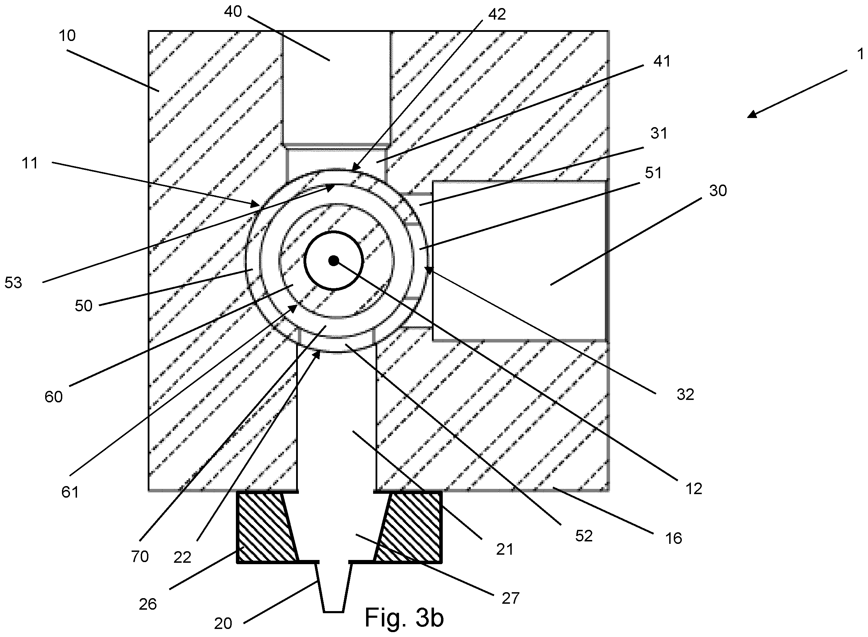

In order to avoid to a large extent a disturbance during piping by gas bubble in the cream to be piped, the arm 105 is provided with a piping system 1, a radial cross section of this system 1 being shown in figure 2 and 3. The piping system 1 comprises a housing 10 having a cylindrical recess 11 along a central axis 12. Along this recess, one or more, such as in this embodiment a plurality, e.g. three or six nozzles 20 are provided. The centres of the nozzles are all positioned along a line on the inner surface of the recess 11, which line is parallel to the axis 12. In figures 2 and 3a, the nozzles are all positioned at the lower point of the recess 11. Hence along the inner side of the recess, each nozzle corresponds with and debouches in the recess by one dedicated cream receiving aperture 22, in this embodiment by a dedicated piping channel 21. Alternatively, one common piping channel may be used. The piping system comprises further three suction volumes 30, each suction volume being linked to the recess by a sucking channel 31 and debouching in the recess by a dedicated suction aperture 32. The centres of the suction apertures may all positioned be along a line on the inner surface of the recess 11, which line is parallel to the axis 12. As shown in figure 2 and 3, the suction apertures are positioned at an angle of 90° counterclockwise rotated around the axis 12 as compared to the centres of the nozzles 20.

In 3b, an alternative set-up is provided. The nozzles 20 are all positioned at the lower point of the recess 11. Each nozzle 20 corresponds with and debouches in an intermediate void 27 of a replaceable nozzle block 26. In a further alternative, not shown in the figures, the an intermediate void 27 is provided in the housing 10, which intermediate void at the lower side 16 of the housing is closed by a nozzle block. The cream receiving apertures 22 are in fluidic communication, for passing the cream, by a dedicated piping channel 21 to the intermediate void 27. Such setup allows a more easily and less cumbersome quick replacement of nozzles with a different output opening.

Further along the recess, one cream feeding means 40 for providing cream in the recess is provided. This cream feeding means is linked to the recess by a feeding channel 41 and debouching in the recess by a feeding aperture 42. It is understood that more than one cream feeding means may be provided. In figures 2 and 3, the feeding aperture 42 is positioned at the upper point of the recess 11. As shown in figure 2 and 3, the feeding aperture is positioned at an angle of 90° counterclockwise rotated around the axis 12 as compared to the centres suction apertures 22 and is positioned perpendicularly to the of cream receiving apertures 21 of the nozzles 20.

In the recess 11, a tubular element is rotatably mounted in and coaxially with the recess 11. The outer diameter of the tubular element is substantially identical to the diameter of the recess, such the tubular element, in this embodiment a tube, snugly fits in the recess. Along the length of the tube, a first 51 and a second 52 slot-like opening is provided. Within the tubular element, an elongate element 60 is positioned in the tubular element 50 along the axis of the tubular element. Between the outer surface 61 of the elongate element and the inner surface 53 of the tubular element, an annular void 70 is provided. The recess, the tubular element and the elongate element, being a cylindrical rod, are all mounted coaxial to the axis 12.the tubular element and the elongate element are rotatably mount in the recess, the housing being in affixed position on the arm 105.

The radial angle between the central lines of the two slot-like opening is 90°. Since the angle between suction apertures 32 and the cream receiving apertures 22 is 90°, and the angle between suction apertures 32 and the feeding aperture 42 is 90°, the tubular element can be rotated to a first angular position in view of the recess, as shown in figure 2. It is understood that also other angles may be chosen, either two identical angles or two angels with a different angle opening. The first slot shaped opening is positioned in front of the feeding aperture and the second slot shaped opening is positioned in front of the suction apertures, and this while the cream receiving apertures being closed by the tubular element. When cream is provided from the storage and pumping means 80 through the feeding channel 41 to the feeding aperture 42, the cream may pass the feeding aperture and the first slot shaped opening 51 and may flow into the annular void 70. The cream will hit the outer surface of the elongate element 60 and flow clockwise and counterclockwise around this elongate element 60. Via the suction apertures 32 and the suction channels 31, cream may be sucked from the annular void 70 into the suction volumes 30. In this particular embodiment, three piston pumps (not shown) may be provided to provide the suction action, one for each suction volume. The effect of passing this cream into the suction volumes is that, when a large air or gas bubble enters the annular void, this bubble is spread into a larger but thinner bubble. Each of the suction volumes may receive a part of this spread larger but thinner bubble, or a part may remain present in the space of the annular void opposite to the suction apertures. Hence the large bubble is broken down in a number of smaller bubbles.

The tubular element can be rotated 90° clockwise to a second angular position in view of the recess, as shown in figure 3. The first slot shaped opening is positioned in front of the suction aperture and the second slot shaped opening is positioned in front of the cream receiving apertures, and this while the feeding aperture is closed by the tubular element. When cream is pushed back out of the suction volumes into the annular void by the pumps, the cream will hit again the outer surface of the elongate element 60 and flow clockwise and counterclockwise around this elongate element 60. Via the cream receiving apertures 22 and the channels 21, cream is now passed to the nozzles 20 where the cream leaves the piping system 1. Again the air or gas bubble which may enter the annular void from the suction volume may be reduced in dimension into even smaller bubbles. The reduction of the large bubbles having entered the piping system 1, is now brought to a size which will hardly influence the piping of the cream via the nozzles.

Once the cream is pushed out of the suction volumes, the tubular element can be rotated 90° counterclockwise back to the second angular position in view of the recess, as shown in figure 2. Alternatively, the tubular element can be rotated 270° clockwise, to obtain the same effect. The former step may be repeated.

As a mere alternative, the feeding aperture or apertures, the suction aperture or apertures and the cream receiving aperture or apertures may be positioned at angles of 120° between the feeding aperture or apertures and the suction apertures, and between the suction apertures and the cream receiving apertures. To bring the tubular element from the first to the second position, a rotation of 120° is necessary in clockwise or counterclockwise direction. To bring the tubular element back from the second to the first position, a rotation of 240° is necessary in the same clockwise or counterclockwise direction, or a rotation of 120° in opposite direction.

As such, a cream guiding means is provided which is moveable in the recess between at least a first and a second position. The cream guiding means in this first position providing a path between the feeding apertures and the suction apertures, the cream guiding means in its second position providing a path between the suction apertures and the cream receiving apertures only.

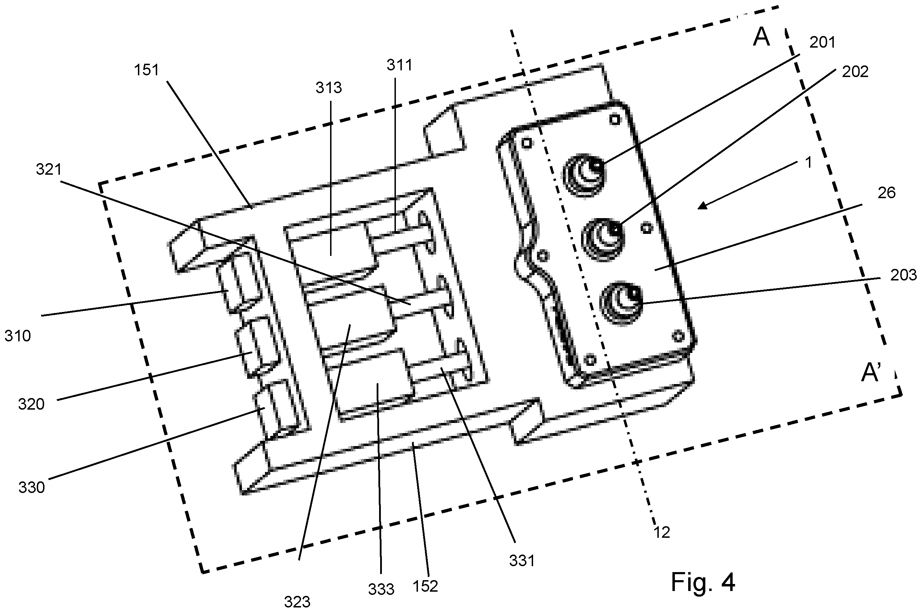

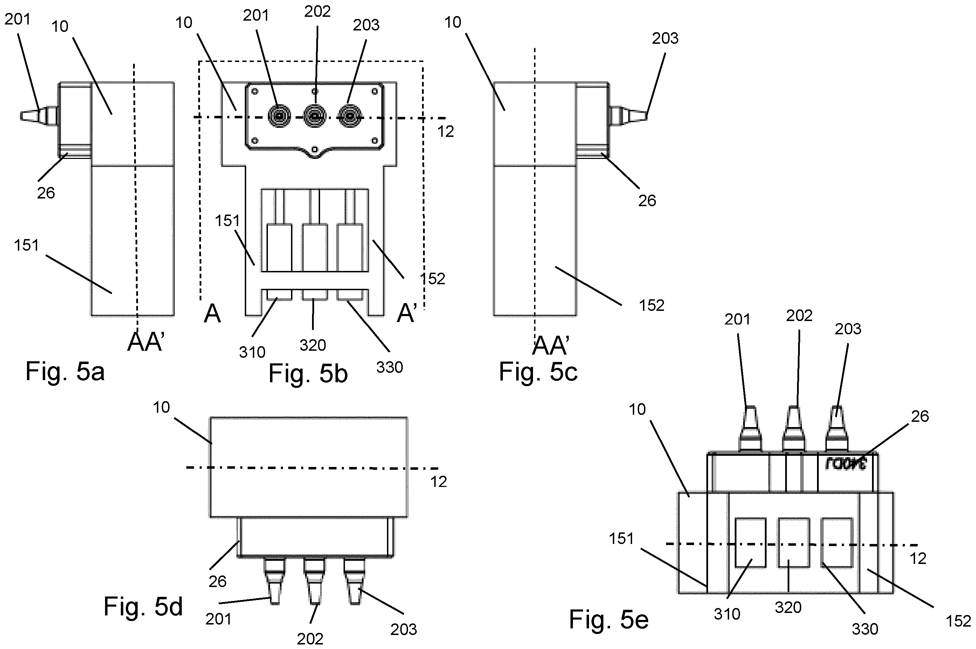

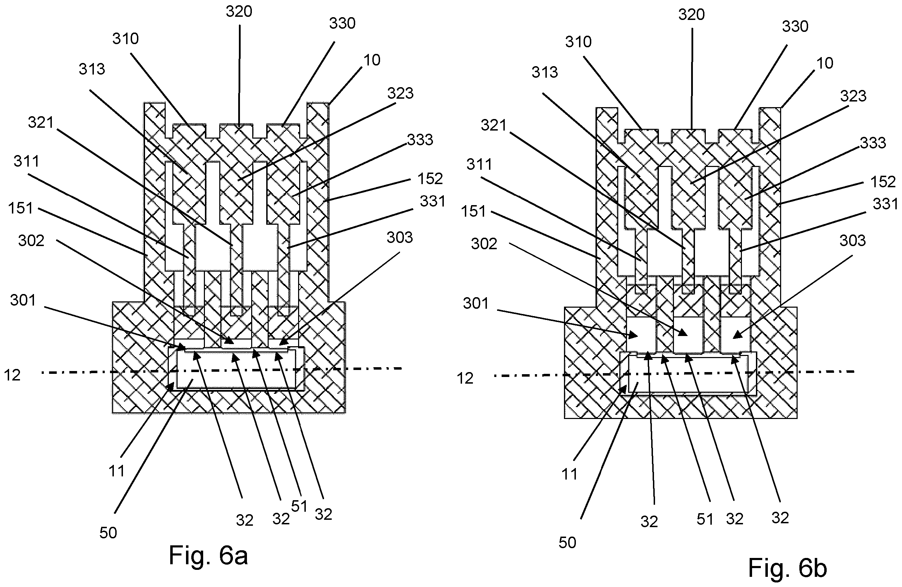

An example of a piping system 1, and details of it, is shown in figures 4 to 6. Figure 4 is a perspective view, figures 5a to 5e are different side views, figure 6a to 6c are cross section of the piping system 1 along the plane AA' with three suction volumes in a different position.

The piping system 1 comprises a housing 10 having a cylindrical recess 11 along a central axis 12.

In the cylindrical recess 11, the tubular element 50 is rotatably mounted in and coaxially with the recess 11. The tubular element can be driven by a driving means, e.g. a rotation actuator driven by a stepper motor (not shown). Alternatively the linear actuator or actuators may be driven by gear motors, servo motors, AC/DC motors, pneumatic motors, hydraulic motors. Alternately also rack and pinion rotary actuators, Scotch Yoke rotary actuators, helical actuators, electrohydraulic actuators, vane rotary actuators and alike, may be used.

. Along the housing, three cream receiving apertures and nozzles 201, 202 and 203 are provided, all aligned with the axis 12 of the tubular element. Each nozzle corresponds with and debouches in the void in the nozzle block 26, and the recess, via the cream receiving apertures is coupled to the void as well via a piping channel. (not visible in the figures 4 to 6).

The housing may be dismantled for cleaning the inner sides of the housing, the tubular element and all other elements, by opening the mounting screws.

The piping system comprises three suction volumes 301, 302 and 303, each suction volume being linked to the recess by a dedicated suction aperture 32. The centres of the suction apertures 32 are all positioned along a line on the inner surface of the recess 11, which line is parallel to the axis 12.

In the recess 11, a tubular element 50, in this embodiment a tube, is rotatably mounted in and coaxially with the recess 11. The outer diameter of the tubular element is substantially identical to the diameter of the recess, such the tubular element, in this embodiment a tube, snugly fits in the recess.

Within the tubular element 50, an elongate element 60 is positioned in the tubular element 50 along the axis of the tubular element. Between the outer surface 61 of the elongate element and the inner surface 53 of the tubular element, an annular void 70 is provided.

At the side of the housing 10 where the suction volumes 301, 302 and 303 and dedicated suction apertures are provided, three piston pumps 310, 320 and 330 are provided, which are individually controllable, and driven by three dedicated linear actuators, as an example here each driven by a stepper motors 313, 323 and 333. Each linear actuator moves linearly a central shaft, which is coupled the respective pistons 311, 321 and 331. The three piston pumps 310, 320 and 330 are mounted aligned with each other between two frame plates 151 and 152, which are part of the housing 10.

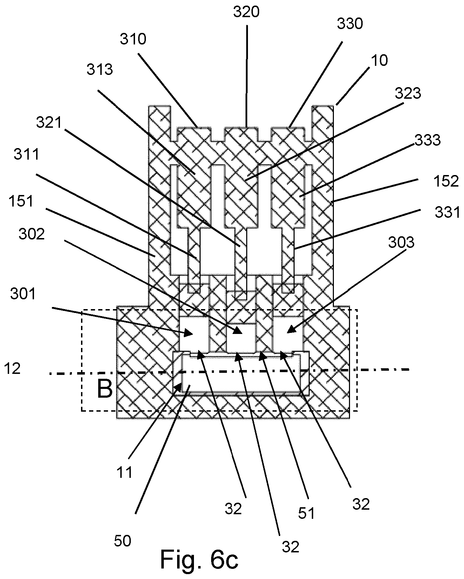

As shown in figures 6, one of the slots 51 or 52, here e.g. slot 51, is positioned in front of the suction openings 32. Depending on the shapes and positions of the various elements of the apparatus, the dimensions of the nozzles, as well as small or larger variations in consistency of the cream to be piped, e.g. by local variations in temperature, by small deviations in the ingredients used, and alike, the smooth sucking in and pushing out of the cream may vary. Therefore, as each piston pumps 310, 320 and 330 is individually controllable such small or even larger deviation may be overcome. By individually controlling the movement of the pistons 311, 312 and 313, possibly also higher flow resistances and/or varying temperatures occurring in the apparatus may be compensated by a different operation of the piston pumps 310 and 330 in view of the pump 320.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A piping system comprises:
- a housing having a cylindrical recess, said recess having a central axis;
- one or more piping nozzles, each piping nozzle in fluidic communication with one or more cream receiving apertures ;
- two or more suction volumes, each suction volume debouching in said recess by one or more suction apertures;
- one or more cream feeding means for providing cream in said recess, each cream feeding means debouching in said recess by one or more feeding apertures;
- a cream guiding means moveable in the recess between at least a first and a second position, the cream guiding means in said first position providing a path between said feeding apertures and the suction apertures, the cream guiding means in said second position providing a path between the suction apertures and the cream receiving apertures only;
wherein the piping system comprises a plurality of pumping systems, each pumping system comprises one or more of said two or more suction volumes, the motion of the plurality of pumping system are individually controllable.

2. A piping system according to claim 1, wherein the number of pumping systems equals the number of suction volumes, each suction volume being part of one of said pumping systems.

3. A piping system according to any one of the claims 1 to 2, wherein the cream guiding means in said first position provides a path between said feeding apertures and each of the suction apertures, the cream guiding means in said second position providing a path between each of the suction apertures and each of the cream receiving apertures.

4. A piping system according to any one of the preceding claims, wherein each pumping system comprises a reciprocating positive displacement pump.

5. A piping system according to claim 4, wherein each reciprocating positive displacement pump comprises a piston or a plunger, for taking in and pushing our cream in the suction volume, the movements of the two or more pistons or plungers are individually controllable.

6. A piping system according to any one of the claims 4 to 5, wherein each of the pistons or plungers are driven by a linear actuator

7. A piping system according to any one of the claims 1 to 6, wherein the cream guiding means comprises
- a tubular element being rotatable in and coaxially with the recess, the outer diameter of the tubular element being substantially identical to the diameter of the recess, the tubular element having a first and a second series of one or more openings;
- an elongate element being positioned in the tubular element along the axis of the tubular element, the outer surface of the elongate element and the inner surface of the tubular element defining an annular void;
wherein the tubular element is rotatable in the recess, the first and a second series of one or more openings of the tubular element, the feeding apertures, the suction apertures and the cream receiving apertures being so positioned that when the cream guiding means in said first position, the tubular element is in at least one first angular position in view of the recess, the first series of one or more openings are positioned in front of the feeding apertures and the second series of one or more openings are positioned in front of the suction apertures, the cream receiving apertures being closed by the tubular element, while when the cream guiding means is in its second position, the tubular element is in at least one second angular position in view of the recess, the first series of one or more openings are positioned in front of the feeding the suction apertures and the second series of one or more openings are positioned in front of the cream receiving apertures, the feeding apertures being closed by the tubular element.

8. A piping system according to claim 7, wherein said elongate element is a tube or a bar.

9. A piping system according to any one of the claims 7 to 8, wherein said elongate element is coaxial with said tubular element.

10. A piping system according to any one of the claims 1 to 9, wherein the system further comprises a control means to control the motion of the two or more pumps individually.

11. A piping system according to claim 10, wherein the control means is adapted to control the timing and/or the volume and/or the speed of the movement of the two or more pumps individually.

12. A piping system according to any one of the claims 10 to 11, wherein the control means is adapted to control the displacement of the movement of the two or more pumps individually.

13. A piping apparatus adapted to pipe creams, the apparatus comprises a working surface for receiving the piped cream, the working surface defining a plane, said apparatus comprises at least one piping system according to any one of the preceding claims, said piping system is positioned along an arm extending over the working surface, the one or more nozzles being oriented towards said working surface, the arm is mounted on a moving system adapted to move the arm over working surface in at least one, and preferably two, directions parallel to the plane, and to move the arm in a direction perpendicular to the plane.

14. A piping apparatus according to claim 13, wherein the system comprises a control means to control the motion of the two or more pumps individually, said control means is adapted to control the movement of the arm.

15. The use of a system or an apparatus according to any one of the preceding claims, for piping cream, in particular during filling of chocolates or pralines with a cream or a filling.
